# DEMANDE DE BREVET EUROPEEN

(11) **EP 1 643 147 A1**
(43) Date de publication de la demande: **05.04.2006**
(21) Numéro de dépôt: 05292001.4
(22) Date de dépôt: 27.09.2005
(51) Int. Cl.: F16D 23/12

(54) **Dispositif d'actionnement d'un organe d'embrayage de véhicule automobile**

(30) Priorité: 30.09.2004 FR 0410338
(71) Demandeur: Peugeot Citroen Automobiles SA, 78140 Vélizy Villacoublay (FR)
(72) Inventeur: Lelasseux, Xavier, 92150 Suresnes (FR); Poirier, Jean-Christophe, 92300 Levallois Perret (FR)
(74) Mandataire: Berger, Helmut

(57) **Abrégé**

L'invention concerne un dispositif d'actionnement (2) d'un organe d'embrayage (1) de véhicule automobile, ce dispositif d'actionnement (2) comprenant un actionneur (10), une fourchette (20) pivotante, et un organe d'actionnement (31) déplacé par l'actionneur (10) entre des première et seconde positions et coopérant avec une extrémité de commande (21) de la fourchette (20).

Selon l'invention, le dispositif comprend un organe élastique (32) interposé en série entre l'organe d'actionnement (31) et l'organe d'embrayage (1), l'organe élastique (32) étant taré de façon à ce que, dans la première position de l'organe d'actionnement (31), une extrémité d'actionnement (22) de la fourchette (20) sollicite l'organe d'embrayage (1) vers sa configuration débrayée avec une pré-charge prédéterminée, le déplacement de l'organe d'actionnement (31) jusqu'à sa seconde position provoquant le pivotement de la fourchette (20) et le passage de l'organe d'embrayage (1) en configuration de débrayage.

## Description

L'invention concerne en général les dispositifs d'actionnement d'un organe d'embrayage de véhicule automobile, cet organe étant susceptible d'adopter des configurations d'embrayage et de débrayage.

Plus précisément, l'invention concerne un dispositif d'actionnement comprenant un actionneur, une fourchette d'entraînement de l'organe d'embrayage pivotante entre des positions d'embrayage et de débrayage correspondant aux configurations d'embrayage et de débrayage de l'organe d'embrayage, et un organe d'actionnement déplacé par l'actionneur entre des première et seconde positions et coopérant avec une extrémité de commande de la fourchette.

Des dispositifs de ce type sont connus de l'art antérieur, et comprennent généralement des moyens pour rattraper les jeux mécaniques entre les différents éléments constituant le dispositif.

Ces jeux résultent du montage, des tolérances mécaniques, de l'usure des différents éléments du dispositif, ou encore de l'usure de l'organe d'embrayage.

Ils comprennent également des moyens pour imposer une pré-charge prédéterminée à l'organe d'embrayage, nécessaire au bon fonctionnement de cet organe.

Ces moyens sont dissociés, ce qui rend l'intégration d'actionneurs motorisés dans de tels dispositifs particulièrement compliquée.

Dans ce contexte, la présente invention a pour but de proposer un dispositif d'actionnement pourvu d'un actionneur, et de moyens pour rattraper le jeu et assurer une pré-charge de l'organe d'embrayage.

A cette fin, le dispositif d'actionnement de l'invention, par ailleurs conforme à la définition générique qu'en donne le préambule ci-dessus, est essentiellement caractérisé en ce qu'il comprend un organe élastique interposé en série entre l'organe d'actionnement et l'organe d'embrayage, l'organe élastique étant taré de façon à ce que, dans la première position de l'organe d'actionnement, la fourchette occupe sa position d'embrayage et une extrémité d'actionnement de la fourchette opposée à l'extrémité de commande sollicite l'organe d'embrayage vers sa configuration débrayée avec une pré-charge prédéterminée, le déplacement de l'organe d'actionnement jusqu'à sa seconde position provoquant le pivotement de la fourchette en position de débrayage et le passage de l'organe d'embrayage en configuration de débrayage.

Le dispositif de l'invention peut également avantageusement présenter une ou plusieurs des caractéristiques ci-dessous.
- La course de l'organe d'actionnement de sa première à sa seconde position est divisée en une première portion, de la première position à une troisième position, au cours de laquelle l'organe élastique est progressivement comprimé sans faire passer l'organe d'embrayage en configuration de débrayage, et une seconde portion, de la troisième position à la seconde position, au cours de laquelle l'organe d'actionnement fait passer l'organe d'embrayage en configuration de débrayage .
- Le dispositif comprend des moyens de pilotage de l'actionneur aptes à mémoriser la troisième position de l'organe d'actionnement.
- Les moyens de pilotage sont aptes à choisir la première position de l'organe d'actionnement en fonction de la troisième position mémorisée, de façon à ce que la première portion de la course soit courte.
- La fourchette présente une forme allongée et est articulée par une partie centrale autour d'une première rotule, l'actionneur déplaçant l'organe d'actionnement sensiblement linéairement suivant une direction générale longitudinale perpendiculaire à la fourchette.
- L'élément élastique est interposé entre l'organe d'actionnement et l'extrémité de commande de la fourchette.
- L'organe d'actionnement est libre en translation longitudinalement par rapport à l'extrémité de commande pendant la première portion de sa course de telle sorte que l'organe élastique se comprime progressivement, l'extrémité de commande étant solidaire en translation longitudinalement de l'organe d'actionnement pendant la seconde partie de la course de celui-ci .
- L'élément élastique est interposé entre l'organe d'embrayage et l'extrémité d'actionnement de la fourchette.
- L'organe d'embrayage passe de sa configuration d'embrayage à sa configuration de débrayage par déplacement d'au moins un élément selon une direction principale, l'extrémité d'actionnement étant libre en translation selon la direction principale par rapport audit élément de l'organe d'embrayage pendant la première portion de la course de l'organe d'actionnement de telle sorte que l'organe élastique se comprime progressivement, et l'extrémité d'actionnement étant solidaire dudit élément en translation selon la direction principale pendant la seconde partie de la course de l'organe d'actionnement.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est un schéma de principe montrant la cinématique du dispositif d'actionnement selon un premier mode de réalisation de l'invention,
- la figure 2 est une représentation graphique de la loi position/effort du dispositif de la figure 1,
- la figure 3 est une vue en perspective du dispositif de la figure 1, la fourchette occupant sa position d'embrayage et l'organe d'actionnement sa première position,
- la figure 4 est une vue agrandie d'un détail IV de la figure 3,
- la figure 5 est une vue en coupe longitudinale du dispositif de la figure 3, considérée selon l'incidence des flèches V,
- la figure 6 est une vue en perspective similaire à celle de la figure 3, la fourchette occupant sa position d'embrayage et l'organe d'actionnement sa troisième position,
- la figure 7 est une vue en perspective similaire à celle de la figure 3, la fourchette occupant sa position de débrayage et l'organe d'actionnement sa seconde position,
- la figure 8 est une vue agrandie d'un détail VIII de la figure 7,
- la figure 9 est une vue en coupe longitudinale du dispositif de la figure 7, considérée selon l'incidence des flèches IX,
- la figure 10 est un schéma de principe montrant la cinématique d'un second mode de réalisation de l'invention, et
- la figure 11 est un schéma de principe montrant la cinématique d'un troisième mode de réalisation de l'invention.

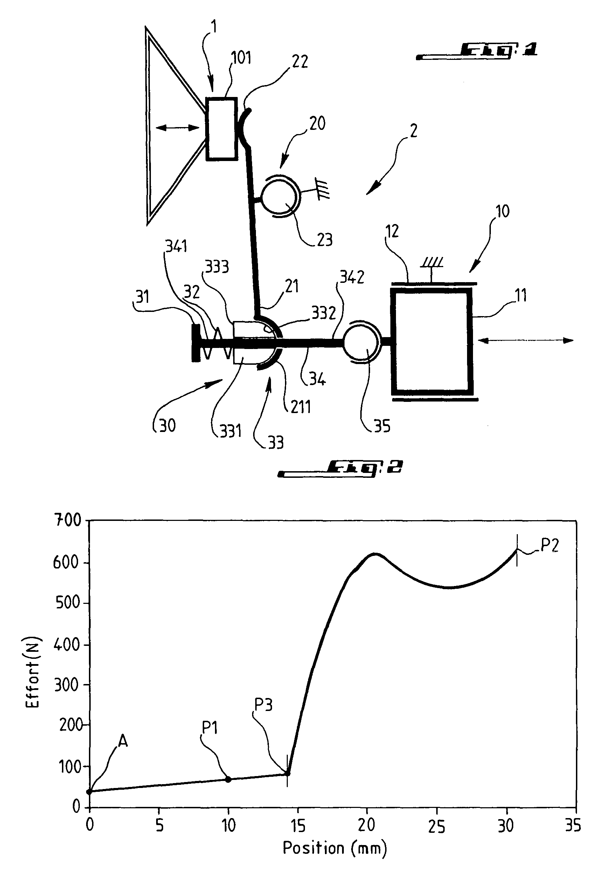

Le dispositif représenté sur le schéma de principe de la figure 1 est destiné à actionner un organe d'embrayage 1 de véhicule automobile, cet organe étant susceptible d'adopter des configurations d'embrayage et de débrayage, dans lesquelles respectivement les roues du véhicule sont ou ne sont pas liées en rotation au moteur.

On voit sur cette figure 1 que ce dispositif d'actionnement 2 comprend un actionneur motorisé 10, une fourchette 20 d'entraînement de l'organe d'embrayage 1 pivotante entre des positions d'embrayage et de débrayage correspondant aux configurations d'embrayage et de débrayage de l'organe d'embrayage, et des moyens de liaison 30 entre l'actionneur 10 et une extrémité de commande 21 de la fourchette 20.

L'organe d'embrayage 1 passe de sa configuration d'embrayage à sa configuration de débrayage par translation d'au moins un élément 101 de cet organe suivant une direction principale, représentée par une flèche sur la figure 1.

La fourchette 20 présente une forme allongée suivant une direction sensiblement perpendiculaire à la direction principale, et est articulée par rapport à une partie fixe du véhicule, par une partie centrale, autour d'une première rotule 23.

La fourchette 20 passe de sa position d'embrayage à sa position de débrayage par pivotement autour de la première rotule 23, une extrémité d'actionnement 22 de la fourchette 20 opposée à l'extrémité de commande 21 poussant ledit élément 101 suivant la direction principale et faisant ainsi passer l'organe d'embrayage 1 de sa configuration d'embrayage à sa configuration de débrayage.

L'organe d'embrayage 1 revient à sa configuration d'embrayage sous l'action de moyens de rappel, non représentés, en poussant l'élément 101 et l'extrémité d'actionnement 22 en sens inverse, ce qui entraîne le pivotement de la fourchette 20 jusqu'à sa position d'embrayage.

L'actionneur 10 comprend une partie cylindrique fixe 12 d'axe longitudinal, et une partie 11 mobile longitudinalement à l'intérieur de la partie fixe 12.

La direction longitudinale est sensiblement perpendiculaire à la fourchette 20 et peut être parallèle ou non à la direction principale.

Les moyens de liaison 30 entre l'actionneur 10 et la fourchette 20 comprennent un organe d'actionnement 31, une tige longitudinale 34 présentant une première extrémité 341 sur laquelle est rigidement fixé l'organe d'actionnement 31 et une seconde extrémité 342, opposée à la première, montée par une liaison rotule 35 sur la partie mobile 11 de l'actionneur 10, et un organe élastique 32 interposé entre l'organe d'actionnement 31 et l'extrémité de commande 21 de la fourchette 20.

Les moyens de liaison 30 comprennent en outre des moyens de liaison rotule 33 constitués par une partie en coupelle 211 de l'extrémité d'actionnement 21 et par une seconde rotule 331 disposée à l'intérieur de la partie en coupelle 211.

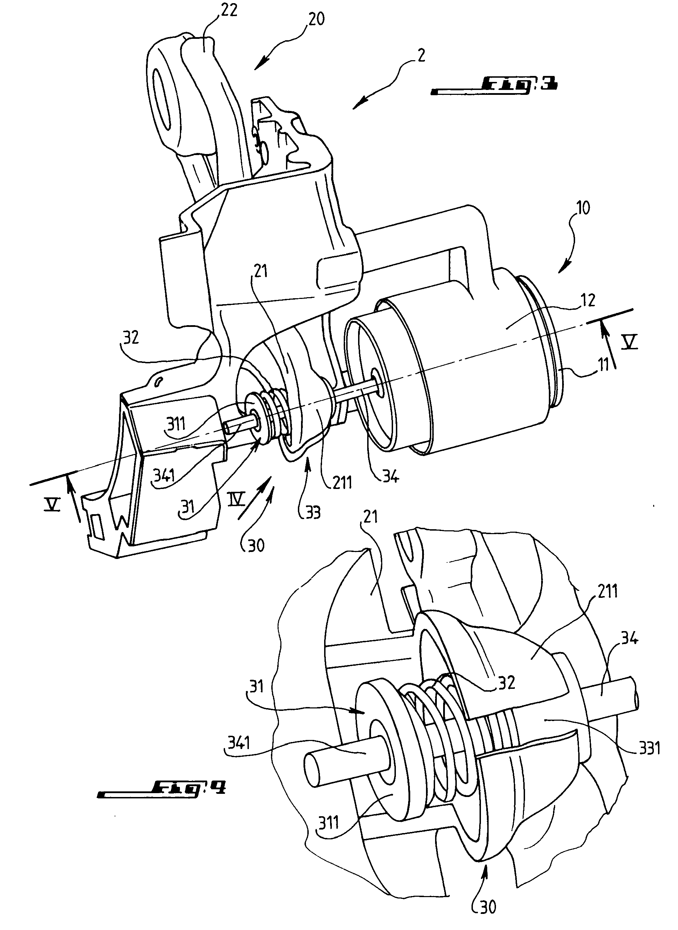

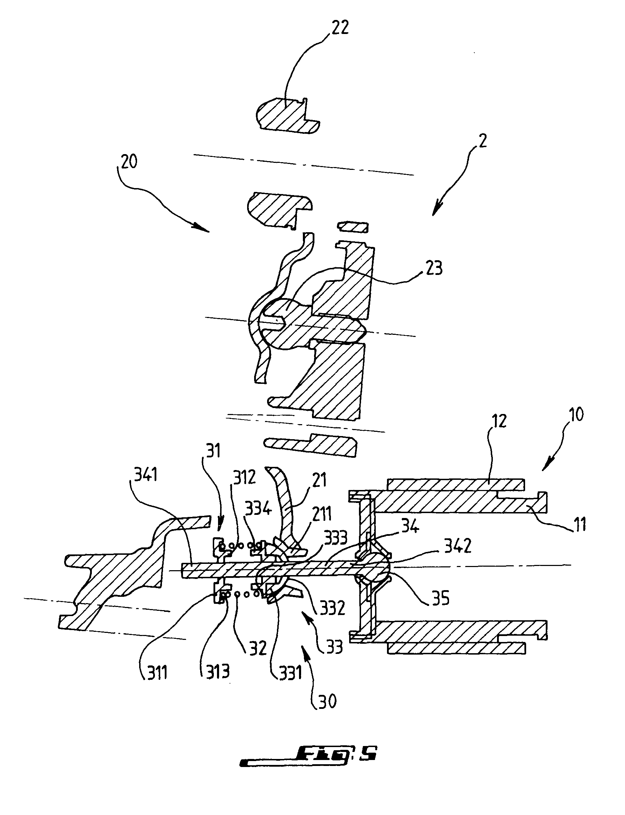

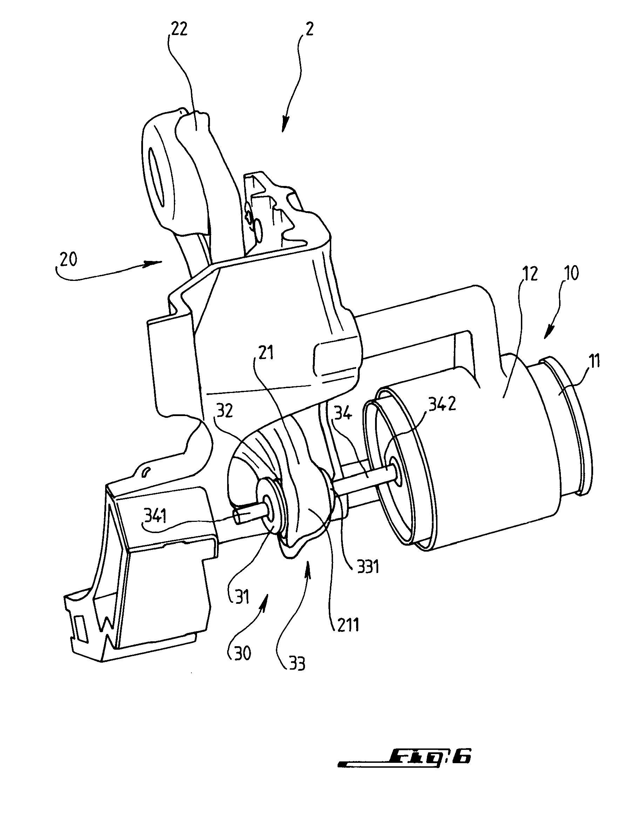

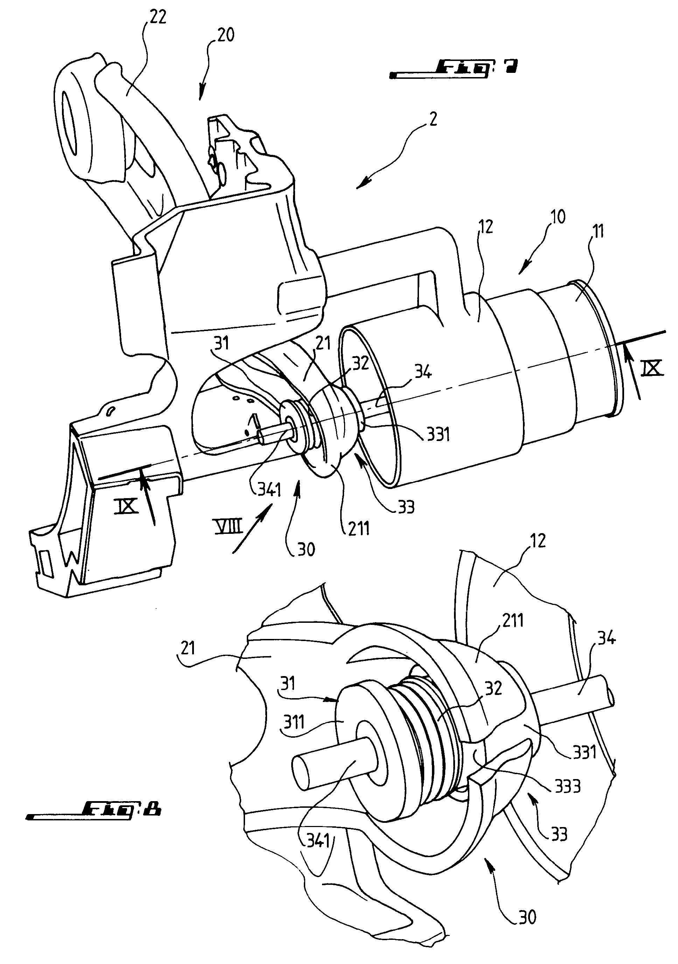

Comme on le voit sur les figures 3 et 5, la partie mobile 11 et l'organe d'actionnement 31 sont disposés respectivement de premier et second côtés longitudinaux opposés de l'extrémité de commande 21 de la fourchette 20, la tige 34 traversant la seconde rotule 331 et la partie en coupelle 211.

La tige 34 est liée en rotation par rapport à la seconde rotule 331 et libre en coulissement par rapport celle-ci, la rotule servant de guidage en translation à la tige 34.

La coupe de la figure 5 montre que l'élément élastique 32 est un ressort à spirales interposé longitudinalement entre l'organe d'actionnement 31 et la seconde rotule 331.

L'organe d'actionnement 31 comprend une partie annulaire 311 s'étendant dans un plan sensiblement perpendiculaire à la tige longitudinale 34, et une première nervure circulaire 312 se dressant sur une face d'appui 313 de la partie annulaire 311 tournée vers l'extrémité de commande 21 de la fourchette 20, cette nervure s'étendant vers l'extrémité de commande 21.

La partie annulaire 311 présente un orifice central recevant à fixation la tige 34.

La première nervure circulaire 312 est coaxiale à la tige 34, la bande de la face d'appui 313 s'étendant d'un côté radialement extérieur de la nervure 312 formant un siège sur lequel prend appui une extrémité de l'organe élastique 32, de telle sorte que la première nervure circulaire s'étend à l'intérieur de l'organe élastique 32.

La seconde rotule 331 présente la forme générale d'une demi-boule, délimitée par une face hémisphérique 332 reposant dans le fond de la partie en coupelle 211, et par une face plane 333 s'étendant sensiblement dans un plan perpendiculaire à la tige longitudinale 34 et tournée vers l'organe d'actionnement 31.

La face plane 333 porte une seconde nervure circulaire 334 coaxiale à la tige 34 et s'étendant vers l'organe d'actionnement 31, la bande de la face plane 333 s'étendant d'un côté radialement extérieur de la nervure 334 formant un siège sur lequel prend appui une autre extrémité de l'organe élastique 32, de telle sorte que la seconde nervure circulaire 334 s'étend à l'intérieur de l'organe élastique 32.

Les première et seconde nervures circulaires 312 et 334 présentent le même diamètre.

Enfin, la seconde rotule 331 est percée d'une lumière longitudinale débouchant au centre de la face plane 333, dans laquelle est engagée à coulissement la tige 34, cette tige traversant le ressort en spirale suivant l'axe de celui-ci.

La partie en coupelle 211 de la fourchette 20 présente une forme générale de demi-sphère, délimitée par une face plane ouverte du côté de l'organe d'actionnement 31, et par une face pleine courbe du côté de l'actionneur 10, cette face pleine étant percée en son centre par un orifice circulaire de passage de la tige 34. On notera que cet orifice présente une section supérieure à la section droite de la tige 34, de façon à autoriser le pivotement de la tige 34 avec la seconde rotule 331 par rapport à la partie en coupelle 211.

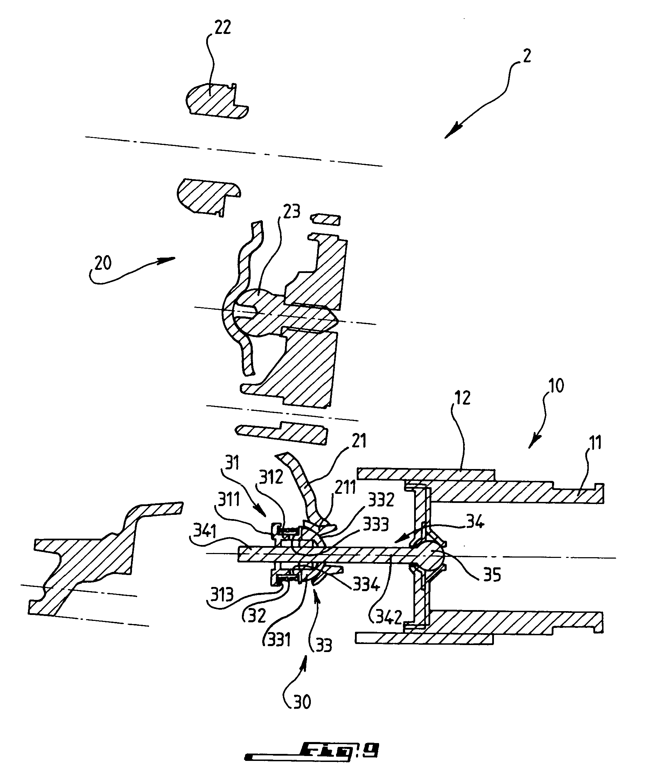

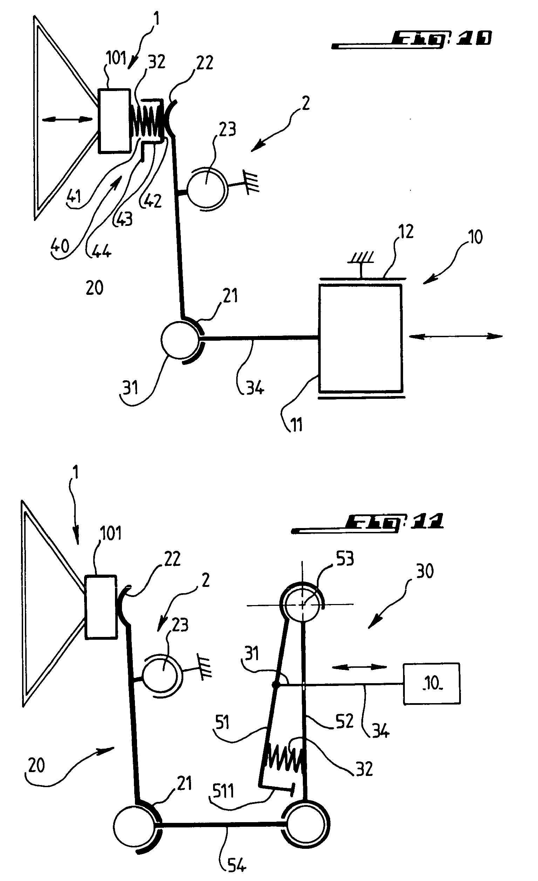

L'organe d'actionnement 31 est déplacé par l'actionneur 10 longitudinalement entre des première et seconde positions, représentées respectivement sur les figures 3 à 5 et sur les figures 7 à 9.

On voit sur les figures 3 à 5 que l'organe d'actionnement 31 occupe sa première position quand l'organe d'embrayage 1 occupe sa configuration d'embrayage et la fourchette 20 sa position d'embrayage.

L'organe d'actionnement 31 et la seconde rotule 331 sont mutuellement écartés, et l'organe élastique 32 est comprimé entre ces deux éléments, de telle sorte qu'il sollicite l'extrémité de commande 21 de la fourchette 20 vers l'actionneur 10.

L'extrémité d'actionnement 22 de la fourchette 20 sollicite l'organe d'embrayage 1 vers sa configuration de débrayage.

La course de l'organe d'actionnement 31 de sa première à sa seconde position est divisée en une première portion, de la première position à une troisième position représentée sur la figure 6, au cours de laquelle cet organe comprime progressivement l'organe élastique 32 sans déplacer l'extrémité de commande 21 de la fourchette 20 ou en la déplaçant très faiblement, et une seconde portion, de la troisième position à la seconde position, au cours de laquelle l'organe d'actionnement 31 fait pivoter la fourchette 20.

Au cours de la première portion de la course, l'organe d'actionnement 31 se rapproche de la seconde rotule, de telle sorte que l'organe élastique 32 exerce un effort croissant sur l'extrémité de commande 21 de la fourchette 20, et l'extrémité d'actionnement 22 un effort croissant sur l'organe d'embrayage 1, cet effort restant insuffisant pour le faire passer dans sa configuration débrayée. L'extrémité de commande 21 ne bouge pas, et la tige 34 coulisse dans la lumière longitudinale de la seconde rotule 331.

Quand l'organe d'actionnement 31 atteint sa troisième position, sa première nervure circulaire 312 vient au contact de la seconde nervure circulaire 334 de la seconde rotule 331. L'effort exercé par l'organe élastique 32 est maximum, mais reste insuffisant pour faire passer l'organe d'embrayage 1 à sa configuration de débrayage.

Dans la seconde portion de la course, l'organe d'actionnement 31 se rapproche encore de l'actionneur 10 et entraîne l'extrémité de commande 21 par l'intermédiaire de la seconde rotule 331. La fourchette 20 pivote progressivement autour de la première rotule 23 vers sa position de débrayage. L'extrémité de commande 21 pivote également par rapport à l'organe d'actionnement 31 et à la tige 34 autour de la seconde rotule 331 (voir figure 9). Il peut également se produire dans cette seconde portion de la course un pivotement de la tige 34 par rapport à la partie mobile de l'actionneur, rendue possible du fait de leur liaison rotule.

Dans la seconde position de l'organe d'actionnement 31, la fourchette 20 occupe sa position de débrayage et l'organe d'embrayage sa configuration de débrayage.

La figure 2 représente graphiquement l'effort exercé par la fourchette 20 sur l'organe d'embrayage 1 (en ordonnée, exprimé en Newton) en fonction de la position de l'organe d'actionnement (en abscisse, exprimée en millimètres).

Le point A (0 mm) correspond à la position de l'organe d'actionnement 31 quand la partie mobile 11 de l'actionneur 10 est déplacée au maximum possible vers l'extrémité de la fourchette 20 (à gauche sur la figure 5).

Les autres positions correspondent à la course de l'organe d'actionnement effectuée à partir du point A vers l'actionneur.

La troisième position (point P3) correspond à une course de 14 millimètres environ à partir du point A, et la seconde position (point P2) correspond à une course de 31 millimètres.

On voit que l'effort exercé sur l'organe d'embrayage 1 augmente lentement entre les points A et P3, du fait de la compression progressive de l'organe élastique 32. L'organe élastique est taré de façon à ce que, au point P3, l'effort exercé soit insuffisant pour provoquer le passage de l'organe d'embrayage 1 à sa configuration de débrayage, cet organe restant en position ou se déplaçant très légèrement.

A partir du point P3 jusqu'au point P2, l'effort de l'actionneur 10 n'est plus transmis à l'extrémité de commande par l'organe élastique 32 mais par l'organe d'actionnement 31 en appui sur la seconde rotule 331, de telle sorte que l'extrémité de commande 21 est solidaire en translation longitudinale de la partie mobile 11 de l'actionneur.

L'effort exercé sur l'organe d'embrayage 1 augmente très vite à partir du point P3 jusqu'à atteindre un maximum (600 N) pour une course de 20 mm environ, puis baisse légèrement avant de revenir à 600 N au point P2.

La première position (point P1) de l'organe d'actionnement 31 est choisie entre les points A et P3, et de préférence relativement proche du point P3.

Par ailleurs, les caractéristiques élastiques de l'organe élastique 32 sont choisies de façon à ce que, en première position de l'organe d'actionnement 31, l'effort exercé par le ressort soit suffisant pour le rattrapage du jeu existant dans le dispositif de commande 2 et pour permettre à la fourchette d'exercer une pré-charge prédéterminée sur l'organe d'embrayage 1.

De préférence, le dispositif d'actionnement 2 comprend des moyens de pilotage de l'actionneur 10 (non représentés) aptes à mémoriser la troisième position de l'organe d'actionnement 31.

Les moyens de pilotage sont aptes à choisir la première position de l'organe d'actionnement 31 en fonction de la troisième position mémorisée, de façon à ce que la première portion de la course soit courte.

La troisième position évolue en fonction de l'usure du dispositif d'actionnement et de l'usure de l'organe d'embrayage.

A chaque retour de la fourchette 20 à sa position d'embrayage, les moyens de pilotage mémorisent la position de l'organe d'actionnement par rapport au point A, c'est-à-dire la troisième position, par exemple en suivant l'effort appliqué à l'organe d'actionnement et en détectant la rupture de pente dans l'évolution de cet effort qui traduit le passage au point P3. En effet, à ce point, comme le montre la figure 2, l'organe d'embrayage est revenu en configuration d'embrayage et les moyens de rappel n'exercent plus d'effort sur l'extrémité d'actionnement de la fourchette, le seul effort subi par l'organe d'actionnement étant l'effort de réaction du ressort 32.

Ainsi, quelle que soit l'usure du dispositif d'actionnement et le jeu résultant de cette usure, le passage de l'organe d'embrayage à sa configuration de débrayage peut toujours être réalisé sur des courses courtes.

La figure 10 représente un second mode de réalisation de l'invention, permettant d'obtenir les mêmes avantages que le premier mode de réalisation correspondant aux figures 1 à 9.

Seules les caractéristiques par lesquelles le second mode de réalisation diffère du premier seront décrites ici, les éléments des deux modes de réalisation ayant la même fonction gardant les mêmes références.

Dans ce second mode de réalisation, l'organe élastique 32 est interposé entre l'extrémité d'actionnement 22 de la fourchette 20 et l'élément 101 de l'organe d'embrayage 1.

Plus précisément, le dispositif d'actionnement 2 comprend un boîtier 40 délimitée par une face ouverte 41 tournée vers l'élément 101 de l'organe d'embrayage 1 et perpendiculaire à la direction principale, un fond 42 parallèle et opposé à la face ouverte 41, et une paroi latérale 43.

L'organe élastique 32 est un ressort en spirale d'axe parallèle à la direction principale, en appui d'un côté sur l'élément 101 et d'un autre côté sur la face intérieure du fond 42.

Par ailleurs, l'extrémité d'actionnement 22 de la fourchette 20 est en appui glissant sur un côté extérieur du fond 42.

Enfin, le boîtier est pourvu d'une patte 44 s'étendant à partir de la paroi latérale 43 dans le plan de la face ouverte 41.

L'organe d'actionnement 31 est constitué par l'extrémité de la tige 34 et est lié par une liaison rotule à l'extrémité de commande 21 de la fourchette 20.

De même que dans le premier mode de réalisation, l'organe d'actionnement 31 occupe sa première position quand la partie mobile 11 de l'actionneur est déplacée vers l'extrémité de commande 21 de la fourchette 20, l'extrémité d'actionnement 22 de la fourchette étant alors éloignée de l'élément 101 de l'organe d'embrayage 1. Le boîtier 40 est repoussé par l'organe élastique 32 contre l'extrémité d'actionnement 22.

Quand l'organe d'actionnement 31 passe de sa première à sa troisième position (première partie de la course), l'extrémité d'actionnement 22 pivote autour de la rotule 23 et se déplace librement vers l'élément 101 suivant la direction principale. Ce mouvement s'accompagne d'un léger glissement sur le fond 42 du boîtier, l'extrémité d'actionnement 22 étant conformée en coupelle, convexe du côté du boîtier, pour faciliter ce glissement.

Le boîtier 40 est entraîné en translation suivant la direction principale vers l'élément 101, ce qui a pour effet de comprimer le ressort 32. Dans la troisième position de l'organe d'actionnement 31, la patte 44 vient au contact direct de l'élément 101.

Dans la seconde partie de la course de l'organe d'actionnement 31, l'extrémité d'actionnement 22 de la fourchette 20 est solidaire de l'élément 101 en translation selon la direction principale, du fait que la patte 44 est en appui sur l'élément 101.

La figure 11 représente un troisième mode de réalisation de l'invention, permettant d'obtenir les mêmes avantages que les deux premiers modes de réalisation.

Seules les caractéristiques par lesquelles ce troisième mode de réalisation diffère du premier seront décrites ici, les éléments des deux modes de réalisation ayant la même fonction gardant les mêmes références.

Les moyens de liaison 30 comprennent des premier et second doigts 51 et 52 pivotant autour d'un même axe 53, cet axe 53 étant par exemple sensiblement parallèle à l'axe de rotation de la fourchette 20 quand celle-ci passe de sa position d'embrayage à sa position de débrayage.

L'organe élastique 32 est interposé entre les deux doigts 51 et 52, le premier doigt 51 comportant en outre une butée 511 s'étendant en direction du second doigt 512.

L'organe d'actionnement 31 est constitué par une extrémité de la tige 34 et est lié par une liaison rotule au premier doigt 51.

Les moyens de liaison 30 comprennent enfin un bras de renvoi 54 dont une extrémité est liée par une liaison rotule au second doigt 52, et dont l'extrémité opposée est liée par une autre liaison rotule à l'extrémité de commande 21 de la fourchette 20.

Le premier doigt 51 est écarté du second dans la première position de l'organe d'actionnement 31, de telle sorte que la butée 511 n'est pas en appui sur le second doigt 52.

Quand l'organe d'actionnement 31 passe de sa première à sa troisième position, le premier doigt 51 pivote en se rapprochant du second et en comprimant l'organe élastique 32. Dans la trosième position, la butée 511 est au contact du second doigt 52.

Quand l'organe d'actionnement 31 passe de sa troisième à sa seconde position, le premier doigt 51 continue son mouvement de rotation et entraîne le second par l'intermédiaire de la butée 511, ce second doigt 52 entraînant à son tour le bras 54, ce qui provoque le pivotement de la fourchette 20 de sa position d'embrayage à sa position de débrayage.

On comprend donc bien que le dispositif d'actionnement décrit ci-dessus présente de multiples avantages.

Il permet d'intégrer un actionneur électromécanique dans un dispositif pourvu à la fois de moyens de rattrapage du jeu et de moyens de pré-charge de l'organe d'embrayage.

Les mêmes organes permettent de réaliser la pré-charge et le rattrapage, de sorte que la structure générale du dispositif est simplifiée.

Enfin, les moyens de pilotage de l'actionneur permettent de positionner l'organe d'actionnement de telle sorte que la course de débrayage soit courte. La position de cet organe est constamment ajustée en fonction de l'usure du dispositif.

Ce principe peut être mis en oeuvre en utilisant plusieurs cinématiques différentes, selon les caractéristiques techniques recherchées pour l'embrayage (loi course/effort visée en particulier).

En particulier, il est possible de prévoir que le dispositif d'actionnement ne comprend pas de fourchette, l'organe d'actionnement 31 entraînant directement l'élément 101 de l'organe d'embrayage, l'organe 31 et l'élément 101 étant conformés de telle sorte que l'organe 31 dans une première partie de sa course comprime le ressort 32, et dans une deuxième partie de sa course vient en contact direct d'un élément solidaire de l'élément 101 et entraîne directement l'élément 101 en translation.

## Revendications

1. Dispositif d'actionnement (2) d'un organe d'embrayage (1) de véhicule automobile susceptible d'adopter des configurations d'embrayage et de débrayage, ce dispositif d'actionnement (2) comprenant un actionneur (10), une fourchette (20) d'entraînement de l'organe d'embrayage pivotante entre des positions d'embrayage et de débrayage correspondant aux configurations d'embrayage et de débrayage de l'organe d'embrayage, et un organe d'actionnement (31) déplacé par l'actionneur (10) entre des première et seconde positions et coopérant avec une extrémité de commande (21) de la fourchette (20), **caractérisé en ce qu'**il comprend un organe élastique (32) interposé en série entre l'organe d'actionnement (31) et l'organe d'embrayage (1), l'organe élastique (32) étant taré de façon à ce que, dans la première position de l'organe d'actionnement (31), la fourchette (20) occupe sa position d'embrayage et une extrémité d'actionnement (22) de la fourchette (20) opposée à l'extrémité de commande (21) sollicite l'organe d'embrayage (1) vers sa configuration débrayée avec une pré-charge prédéterminée, le déplacement de l'organe d'actionnement (31) jusqu'à sa seconde position provoquant le pivotement de la fourchette (20) en position de débrayage et le passage de l'organe d'embrayage (1) en configuration de débrayage.

2. Dispositif d'actionnement selon la revendication 1, **caractérisé en ce que** la course de l'organe d'actionnement (31) de sa première à sa seconde position est divisée en une première portion, de la première position à une troisième position, au cours de laquelle l'organe élastique (32) est progressivement comprimé sans faire passer l'organe d'embrayage en configuration de débrayage, et une seconde portion, de la troisième position à la seconde position, au cours de laquelle l'organe d'actionnement (31) fait passer l'organe d'embrayage en configuration de débrayage .

3. Dispositif d'actionnement selon la revendication 2, **caractérisé en ce qu'**il comprend des moyens de pilotage de l'actionneur (10) aptes à mémoriser la troisième position de l'organe d'actionnement (31).

4. Dispositif d'actionnement selon la revendication 3, **caractérisé en ce que** les moyens de pilotage sont aptes à choisir la première position de l'organe d'actionnement (31) en fonction de la troisième position mémorisée, de façon à ce que la première portion de la course soit courte.

5. Dispositif d'actionnement selon l'une quelconque des revendications 2 à 4, **caractérisé en ce que** la fourchette (20) présente une forme allongée et est articulée par une partie centrale autour d'une première rotule (23), l'actionneur (10) déplaçant l'organe d'actionnement (31) sensiblement linéairement suivant une direction générale longitudinale perpendiculaire à la fourchette (20).

6. Dispositif d'actionnement selon la revendication 5, **caractérisé en ce que** l'élément élastique (32) est interposé entre l'organe d'actionnement (31) et l'extrémité de commande (21) de la fourchette (20).

7. Dispositif d'actionnement selon la revendication 6, **caractérisé en ce que** l'organe d'actionnement (31) est libre en translation longitudinalement par rapport à l'extrémité de commande (21) pendant la première portion de sa course de telle sorte que l'organe élastique (32) se comprime progressivement, l'extrémité de commande (21) étant solidaire en translation longitudinalement de l'organe d'actionnement (31) pendant la seconde partie de la course de celui-ci .

8. Dispositif d'actionnement selon la revendication 5, **caractérisé en ce que** l'élément élastique (32) est interposé entre l'organe d'embrayage (1) et l'extrémité d'actionnement (22) de la fourchette (20).

9. Dispositif d'actionnement selon la revendication 8, **caractérisé en ce que** l'organe d'embrayage (1) passe de sa configuration d'embrayage à sa configuration de débrayage par déplacement d'au moins un élément (101) selon une direction principale, l'extrémité d'actionnement (22) étant libre en translation selon la direction principale par rapport audit élément (101) de l'organe d'embrayage (1) pendant la première portion de la course de l'organe d'actionnement (31) de telle sorte que l'organe élastique (32) se comprime progressivement, et l'extrémité d'actionnement (22) étant solidaire dudit élément (101) en translation selon la direction principale pendant la seconde partie de la course de l'organe d'actionnement (31).

10. Dispositif d'actionnement selon l'une quelconque des revendications 1 à 9, **caractérisé en ce que** l'organe élastique (32) est interposé entre un premier doigt pivotant (51) sur lequel agit l'organe d'actionnement (31) et un second doigt pivotant (52) relié à l'extrémité de commande (21) de la fourchette (20).
